# EUROPEAN PATENT SPECIFICATION

(11) **EP 2 896 862 B1**
(45) Date of publication and mention of the grant of the patent: **04.03.2020**
(21) Application number: 15150266.3
(22) Date of filing: 07.01.2015
(51) Int. Cl.: F01D 9/06, F16B 5/02, F16L 5/02, F16L 27/11, F01D 25/04, F01D 25/18, F01D 25/14

(54) **Fastener, corresponding fastener assembly and gas turbine**
Befestigung, zugehörige Befestigungsanordnung und Gasturbine
Fixation, ensemble de fixation et turbine à gaz associés

(30) Priority: 17.01.2014 GB 201400776
(43) Date of publication of application: 22.07.2015
(73) Proprietor: Rolls-Royce plc, London N1 9FX (GB)
(72) Inventor: Clarke, Samuel, Derby, Derbyshire DE24 8BJ (GB)
(74) Representative: Rolls-Royce plc

(56) References cited:
- EP-A2- 1 867 909
- CN-A- 103 062 510
- CN-A- 103 090 116
- CN-A- 103 090 117
- CN-A- 103 123 020
- CN-A- 103 133 783
- CN-U- 202 402 800
- CN-U- 202 597 914

## Description

### Field of the Invention

The present invention relates to a fastener for securing two pipe adapters and particularly, but not exclusively, to a fastener for securing two pipe adapters in a high temperature/pressure environment such as within the casing of a gas turbine.

### Background of the Invention

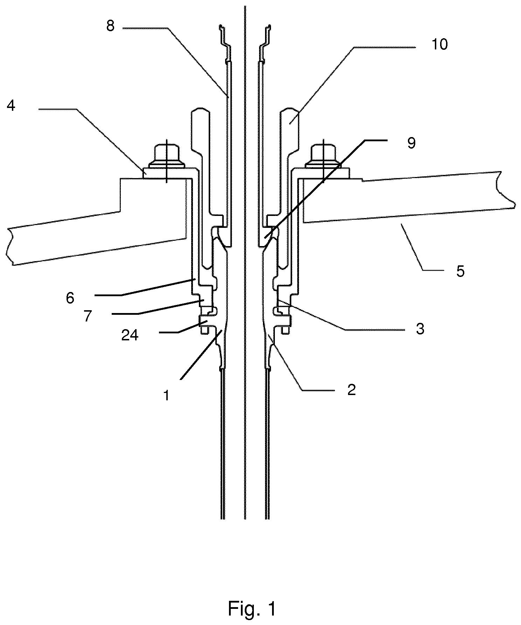

Gas turbines extract energy from a hot gas stream received from a combustor and the energy is used to power a fan, propeller, compressor or generator.
Each turbine includes an assembly of bladed discs mounted on and rotatable about a turbine bearing support structure and enclosed within a turbine casing.
The turbine bearing support structure typically contains internal service pipes for oil feed, scavenge and venting of bearing chambers, ducting high pressure air from the compressor and to provide air for sealing or cooling. All of these internal service pipes need to be connected to external pipework (i.e. pipework outside the turbine casing). The connections between the internal and external pipes are typically provided within the turbine casing which exposes the connections to the elevated temperatures and pressures within the turbine.
A prior art fastener assembly for connecting internal and external pipes in a bearing support structure is shown in Figure 1.
An internal pipe 1 of the turbine bearing support is provided with a threaded adapter 2. The adapter 2 has a spherical sealing surface 3 provided with an anti-wear coating. A sleeve has a laterally extending portion 4 which is bolted to the casing 5 and an axially extending portion 6 which carries a sealing surface 7 which abuts the spherical sealing surface 3 on the adapter 2. The adapter 2 includes anti-rotation dog members 24 which are engaged in a slot in the axially extending portion 6 of the sleeve to react against the applied torque loads and prevent over-torqueing of the pipe 1.

An external pipe of the turbine bearing support is provided with a pipe adapter 8, that may be a ferrule, having a flange 9. The flange 9 is secured against the adapter 2 using a threaded nut 10, the threads of the threaded nut 10 mating with the threaded adapter 2. The components are locked into place using a positive locking device such as a locking wire or anti-rotation bracket.

There are a number of problems with this prior art fastener assembly.
Firstly, any axial or radial movement of the pipes resulting from, for example, build misalignment or tolerance build-up, thermal expansion or engine running conditions, may result in fretting or uneven wear at the sealing surfaces causing the seals to fail. This is particularly problematic with the spherical sealing surfaces of the prior art fastener assembly design which are difficult to manufacture consistently.

Whilst anti-wear/anti-fret coatings are provided on the sealing surfaces of the adapter and the sleeve 7, the cost of these coatings is significant and they are often unsuitable for use at the elevated temperatures associated with gas turbines.
Furthermore, extraction of the prior art assembly for replacement of worn parts can be tricky as a result of the interference at the spherical sealing surfaces.
CN103090116 discloses a sleeve-tooth-shaped floating sealing structure penetrating a casing characterised by comprising the casing, casing mounts, transfer pipe sleeves, bolts, an external cone connector, a guide pipe, a ball joint housing, a ball joint, a captive nut, a flat nozzle and a guide pipe. The external cone connector and the guide pipe are integrated to be a guide pipe assembly inside the casing; the captive nut, the flat nozzle and the guide pipe are integrated by welding to be a guide pipe assembly outside the casing; the casing mounts are connected on the casing by welding or riveting; the transfer pipe sleeves are fixed on the casing mounts through bolts ,and closed up through the ball joint housing to be integrated with the ball joint; the ball joint housing can freely rotate corresponding to the ball joint in all directions within an allowed spacial range; and the ball joint is welded on the guide pipe.
CN103062510 discloses a double-ball angle sealing structure used for penetrating through a cartridge receiver comprising a cartridge receiver, a cartridge receiver installation seat, a guide pipe, an abnormal-shaped external cone connector, a caulking ring, a floating sleeve, a bolt one, an externally-added nut, a flat pipe orifice, a guide pipe, an installation seat press plate and a bolt two. The abnormal-shaped external cone connector is lower than the surface of an inner passage of the cartridge receiver; assembling of a guide pipe assembly is finished before assembling of the cartridge receiver; the externally-added nut, the flat pipe orifice and the guide pipe are assembled into a whole; assembling of a guide pipe assembly is finished before assembling of the cartridge receiver; the abnormal-shaped external cone connector is connected with the externally-added nut and the flat pipe orifice to realise connection and sealing of pipelines inside and outside the cartridge receiver; and the caulking ring is arranged on the abnormal-shaped external cone connector and is in small clearance fit with the floating sleeve.

CN202597914 discloses a flange type connecting structure of a pipeline passing through a casing. The flange type connecting structure comprises the casing, a casing mounting seat, a transfer pipe sleeve, bolts I, a floating ring, an abnormal-shape joint, a duct I, a joint, a flange pressing plate, a duct II and a sealing ring, wherein the casing mounting seat is welded or riveted on the casing; the transfer pipe sleeve is fixedly arranged on the casing mounting seat through the bolts I; the floating ring is mounted between the abnormal-shape joint and the transfer pipe sleeve; the flange pressing plate is connected with the abnormal-shape joint by adopting bolts II; the abnormal-shape joint and the duct I is welded into a whole to form an inner pipeline component of the casing, the abnormal-shape joint is lower than the surface of an inner bypass of the casing, and the inner pipeline component is assembled before the casing is assembled; and the duct II, the joint and the flange pressing plate are welded into a whole to form an outer pipeline component of the casing, and the duct pipeline is assembled after the casing is assembled.

CN103133783 discloses a pipeline double-thread connection structure penetrating through a cartridge receiver characterised by comprising the cartridge receiver, a cartridge receiver installation seat, a leading out tube sleeve, a bolt, a floating ring, a sealing threaded sleeve, a double-thread external cone joint, a guide tube, an added nut, a flat tube opening and a guide pipe, wherein the external cone joint and the guide tube are welded into a whole to be as a cartridge receiver inner guide tube component; the added nut, the flat tube opening and the guide pipe are welded into whole to be a cartridge receiver outer guide tube component. The cartridge receiver installation seat is welded or riveted on the cartridge receiver. The leading out tube sleeve is fixed on the cartridge receiver installation seat through the bolt, and the floating ring is installed between the sealing threaded sleeve and the leading out tube sleeve.

CN202402800 discloses an abnormity nut type floating seal structure for penetrating through a casing comprising a casing installing base, a floating sleeve, an installing base pressing plate, a bolt, a piston ring, a flat nozzle, an external abnormity nut and a connector. The casing installing base is welded or riveted on the casing, the installing base pressing plate is fixed on the casing installing base through the bolt, the floating sleeve is in clearance fit with the casing installing base and the installing base pressing plate, the periphery of the floating sleeve can move freely, and the piston ring is installed on the external abnormity nut and in small clearance fit with the floating sleeve.

CN103090117 discloses a sealing structure for case-penetrating pipelines characterised by comprising a case, a case mounting seat, a floating sleeve, a mounting seat pressure plate, first bolts, a first guide pipe, a deformed connector, a packing ring, a seal ring, a moving connector, a second guide pipe, a pressure plate and second bolts. The case mounting seat is welded or riveted on the case. The mounting seat pressure plate is fixed on the case mounting seat through the first bolts. The floating sleeve is in clearance fit with the case mounting seat and the mounting seat pressure plate. The packing ring is disposed on the deformed connector and is in small clearance fit with the floating sleeve. The second guide pipe and the deformed connector are welded integrally. Space between the moving connector and the deformed connector is sealed by the seal ring. The pressure plate is connected with the deformed connector through the second bolts. The moving connector, the second guide pipe and the pressure plate are integrally welded.

CN103123020 discloses a rigid connection structure of a pipeline penetrating through an engine box. The rigid connection structure of the pipeline penetrating through the engine box is characterized by comprising an engine box, an engine box installation seat, an outlet pipe sleeve, bolts, a long thread external cone connector, a locking barrel, an additional nut, a flat pipe nozzle and a conduit, wherein the engine box installation seat is connected on the engine box in a welded mode or in a riveting mode, the outlet pipe sleeve is fixed on the engine box installation seat through the bolts, a floating sleeve is in circumferential direction locking small clearance fit with the long thread external cone connector, the long thread external cone connector is connected with the locking barrel in a threaded mode, the additional nut, the flat pipe nozzle and the conduit are welded into a whole, and after the engine box is assembled, assembling of the pipeline is finished.

EP1867909 discloses a penetration system for a pipe entering a duct wall at a pipe stub. The penetration system may include a thermal sleeve surrounding the pipe stub and a bellows positioned below the thermal sleeve and about the pipe.

### Summary of the Invention

The invention is defined by the accompanying claims.

### Brief Description of the Drawings

Embodiments of the invention will now be described by way of example with reference to the accompanying drawings in which:
Figure 1 shows a prior art fastener assembly;
Figures 2 and 3 show a cross-sectional view through a first embodiment of fastener assembly according to the present invention;
Figure 4 shows a cross-sectional view through a second embodiment of fastener assembly according to the present invention;
Figure 5 shows a top and bottom view of the first and second embodiments of the fastener assembly according to the present invention; and
Figure 6 shows a cross-sectional view of a turbine engine comprising a fastener assembly according to the present invention.

### Detailed Description and Further Optional Features of the Invention

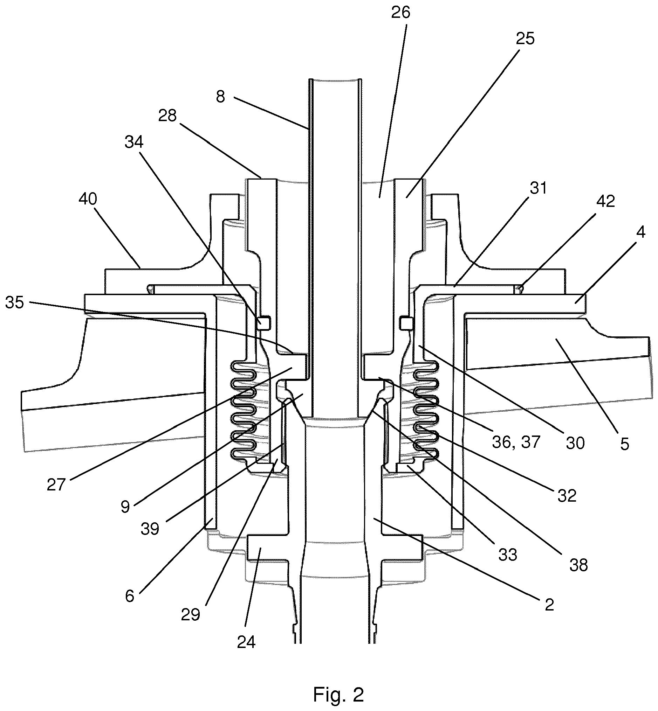

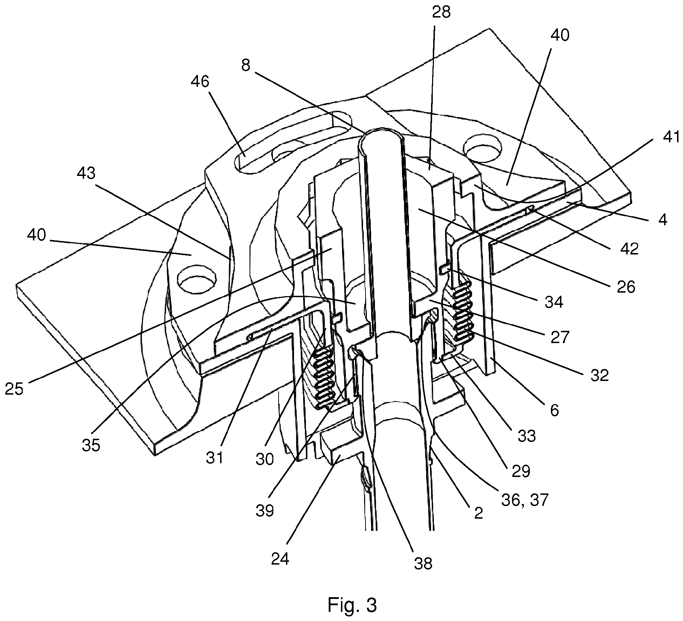

Referring to Figures 2, 3 and 5, a first embodiment of the fastener assembly includes a fastener having a fastener body 25 with a central bore 26 and a first engagement portion in the form of a radial projection 27 extending into said central bore 26. The radial projection has an upper surface 35 and a lower surface 36.

The fastener body 25 has an upper axial end 28 and a lower axial end 29 with the radial projection 27 axially spaced between the upper and lower axial ends 28, 29.

The central bore 26 is partially threaded i.e. is threaded from below the radial projection 27 to the lower axial end 29. The threaded portion towards the lower axial end 29 constitutes a second engagement portion.

The fastener further comprises an outer wall 30 which at least partly surrounds and is spaced from said fastener body in a concentric arrangement. The outer wall 30 comprises a fastener flange 31 extending radially in a direction away from said fastener body 25.

A deformable/flexible portion 32 of the outer wall 30 is provided in the form of a corrugated wall portion which provides "bellows" surrounding part of the fastener body 25.

The deformable/flexible portion 32 of the outer wall 30 is formed of Inconell™ or other temperature resistant material such as a steel or nickel based alloy.

A first end 33 of the outer wall 30 is welded to the fastener body 25 at the lower axial end 29 of the fastener body 25.

The fastener body 25 comprises a secondary seal 34 on an outer surface at an axial position between the radial projection 27 and the upper axial end 28 of the fastener body 25.

The secondary seal may be a split ring, a piston ring, an o-ring or a profiled ring such as an E or C seal. The secondary seal may be formed of metal or an elastomeric polymer.

The secondary seal 34 is provided on the outer surface of the fastener body 25 between the fastener body 25 and the outer wall 30. The portion of the outer wall 30 in abutment the secondary seal is non-deformable/flexible.

The outer wall 30 may also include at least one aperture (not shown) for pressure balancing, purging or draining of fluids.

The fastener flange 31 is an annular flange.

The fastener assembly further comprises a first pipe adapter for fitting to an end of a first pipe and a second pipe adapter 2 for fitting to the end of a second pipe.

The first pipe is an external pipe i.e. external to the turbine whilst the second pipe is an internal pipe i.e. internal to the turbine.

The first pipe adapter may be a ferrule. The first pipe adapter 8 has an adapter flange 9 with an upper surface 37 and a lower surface 38.

The second pipe adapter 2 has a threaded outer surface 39 for mating with the threaded central bore 26 of the fastener body 25. It includes anti-rotation dog members 24.

To form the fastener assembly, a top-hat sleeve is inserted into a bore in the casing 5. The top-hat sleeve has a lateral annular portion 4 which overlays the casing 5 and includes holes through which pins or bolts are inserted to secure the top-hat sleeve to the casing 5.

An axial portion 6 of the top-hat sleeve is centred over the second pipe adapter 2 so that the anti-rotation dog members 24 on the second pipe adapter 2 are received within slots in the axial portion 6 to react against the applied torque loads and prevent subsequent over-torqueing of the second pipe adapter 2.

The first pipe adapter 8 is fitted to the fastener with the upper surface 37 of the adapter flange 9 in abutment with the lower surface 36 of the radial projection 27.

The fastener and first pipe adapter 8 are inserted into the bore in the casing 5 and the fastener rotated so that the threaded portion of the central bore 26 of the fastener body 25 cooperates with the threaded surface 39 on the second pipe adapter 2 until the lower surface 38 of the adapter flange 9 of the first pipe adapter 8 is in abutment with the second pipe adapter 2. The locking of the anti-rotation dog members 24 by the axial portion 6 of the top-hat sleeve ensures that the second pipe adapter 2 does not rotate.

The fastener flange 31 is brought into abutment with the lateral annular portion 4 of the top-hat sleeve.

Next, a clamping ring 40 having an upstanding element 41 is centred over the fastener with the fastener flange 31 located between the lateral annular portion 4 of the top-hat sleeve and the clamping ring 40. The underside of the clamping ring has a recess 42 for receiving the fastener flange31 and any additional gaskets or spacers.

The clamping ring 40 has cut-outs 43 to reduce with weight of the assembly and slots 46 through which pins/bolts can be secured to the top-hat sleeve/casing 5 to clamp the fastener flange 31 to the casing.

The bolts/pins in the clamping ring 40 and the lateral annular portion 4 of the top-hat sleeve secure the fastener assembly in the casing and securely join the internal and external pipes. As axial/radial movement of the pipes/adapters occurring as a result of, for example, build misalignment or tolerance build-up, thermal expansion or engine running conditions, the movement is dampened by the bellows i.e. by the corrugated deformable/flexible outer wall portion so that the seal between the two adapters 8, 2 remains uncompromised.

In case of failure of the deformable wall portion, the secondary seal 34 prevents/minimises the escape of hot gas/liquid from within the turbine casing.

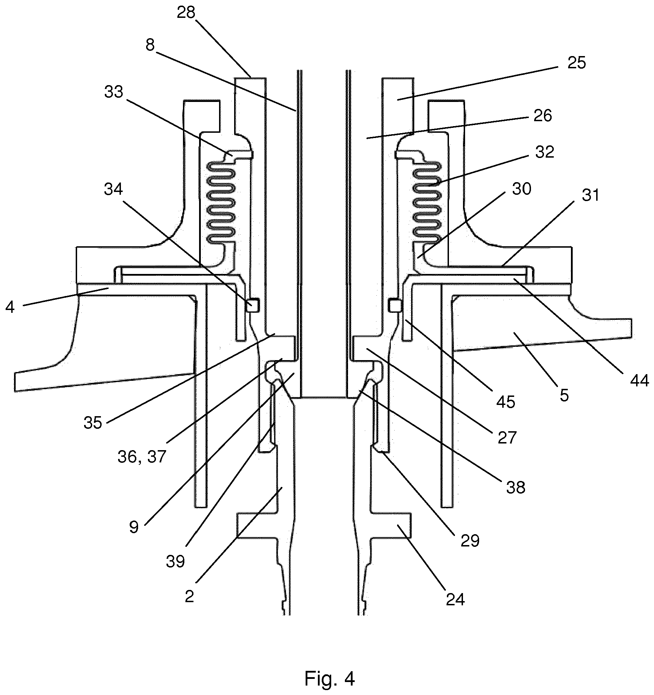

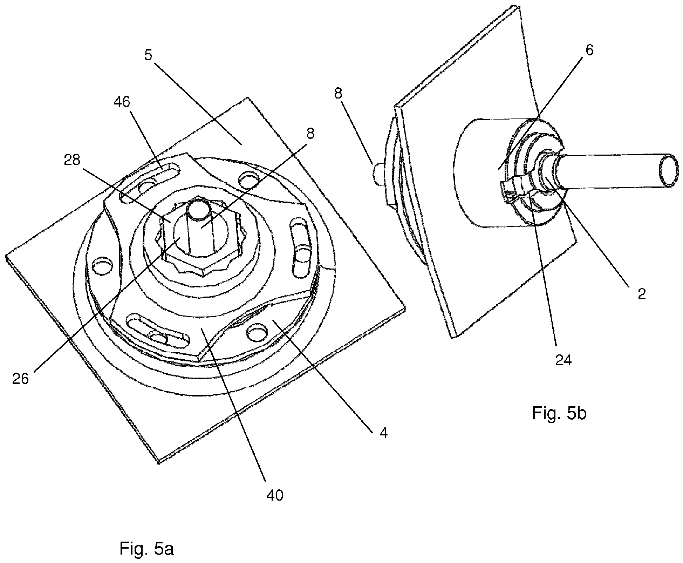

Referring to Figures 4 and 5, a second embodiment of the fastener assembly is shown with many features in common with the first embodiment. Like features are shown using the same reference numerals and they will not be described again here.

In this second embodiment, the first end 33 of the outer wall 30 is welded to the fastener body 25 above the radial projection 27 towards the upper axial end 28 of the fastener body 25. This means that the bulk of the fastener including the deformable wall portion (bellows) are external to the turbine and thus more easily accessible should replacement be needed.

The secondary seal 34 is provided on the outer surface of the fastener body 25 remote from the outer wall 30.

After insertion and centring of the top-hat sleeve into the bore in the casing 5, a second sleeve comprising a second lateral annular sleeve portion 44 and a second axial sleeve portion 45 is inserted so that the second lateral annular sleeve portion 44 overlays the lateral annular sleeve portion 4 of the top-hat sleeve.

The second axial sleeve portion 45 abuts the secondary seal 34.

In some embodiments (not shown), the second sleeve may be formed integrally with the outer wall 30 in which case it is inserted into the bore in the casing at the same time as the first pipe adapter 8 and fastener. In these embodiments, the second lateral annular sleeve portion 44 and the fastener flange 31 may be a unitary flange..

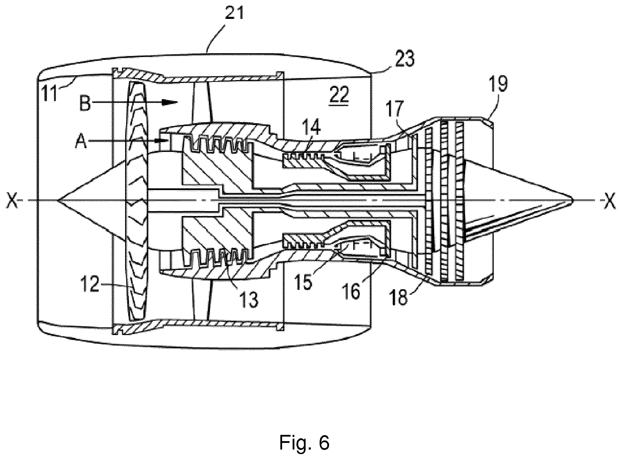

Referring to Figure 6, a gas turbine engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

Service pipes carrying gases (e.g. compressed air) and liquids (e.g. lubricating oils) are required to pass through the various components and the seals at the connections between the pipes internal to the turbines 16, 17, 18 can be compromised owing to the high temperatures/pressures in the turbines 16, 17, 18.

Fastener assemblies described above as the first and second embodiments are provided at the intermediate- and low-pressure turbines 17, 18 to secure the service pipes.

## Claims

1. A fastener for connecting two pipe adapters within a casing, the fastener comprising a fastener body (25) having a central bore (26) with a first engagement portion for engagement with a first pipe adapter (8) and a second engagement portion for engagement with a second pipe adapter (2), wherein the fastener further comprises an outer wall (30) at least partly surrounding and spaced from said fastener body (25) and having a first end connected to the fastener body (25), the outer wall (30) comprising a fastener flange (31) extending radially in a direction away from said fastener body (25) for overlaying the casing, a portion of the outer wall (30) being deformable in use so as to dampen axial and/or radial movement of the pipe adapters (8, 2).

2. A fastener according to claim 1 wherein the deformable portion of the outer wall (30) is a flexible wall portion.

3. A fastener according to claim 1 or 2 wherein the deformable portion is a corrugated wall portion.

4. A fastener according to any one of claims 1 to 3 wherein said fastener body (25) has an upper axial end (28) and a lower axial end (29) with the first engagement portion axially spaced between the upper (28) and lower (29) axial ends, and wherein the first end of the outer wall (30) is connected to the fastener body (25) at an axial position between the first engagement portion and the lower axial end (29).

5. A fastener according to any one of claims 1 to 3 wherein said fastener body (25) has an upper axial end (28) and a lower axial end (29) with the first engagement portion axially spaced between the upper (28) and lower (29) axial ends, and wherein the first end of the outer wall (30) is connected to the fastener body (25) at an axial position between the first engagement portion and the upper axial end (28).

6. A fastener according to claim 4 or 5 wherein said fastener body (25) comprises a secondary seal (34) on an outer surface at an axial position between the first engagement portion and the upper axial end (28) of the fastener body (25).

7. A fastener according to claim 6 wherein said secondary seal (34) is provided on the outer surface of the fastener body (25) between the fastener body (25) and the outer wall (30).

8. A fastener according to claim 6 wherein said secondary seal (34) is provided on the outer surface of the fastener body (25) remote from the outer wall (30).

9. A fastener according to any one of the preceding claims wherein the first engagement portion is a radial projection extending into the central bore (26).

10. A fastener according to any one of the preceding claims wherein the second engagement portion is a threaded portion.

11. A fastener assembly for connecting two pipe adapters (8, 2) within a casing, the fastener assembly comprising:
a fastener (25) according to claim 1;
a first pipe adapter (8) having a first pipe adapter engagement portion; and
a second pipe adapter (2) having a second pipe adapter engagement portion.

12. A fastener assembly according to claim 11 further comprises a clamping ring (40) for clamping the fastener flange (31) to the casing.

13. A fastener assembly according to claim 12 wherein the clamping ring (40) further comprises an upstanding element (41) for surrounding the fastener body (25).

14. A fastener assembly according to any one of claims 11 to 13 further comprises at least one sleeve having a lateral annular portion (4) and an axial portion (6) wherein the lateral annular portion is interposed between the fastener flange (31) and the casing.

15. A gas turbine having a fastener or fastener assembly as defined in any one of the preceding claims.

## Patentansprüche

1. Befestigung zum Verbinden von zwei Rohradaptern innerhalb eines Gehäuses, wobei die Befestigung einen Befestigungskörper (25) umfasst, der eine zentrale Bohrung (26) mit einem ersten Eingriffsabschnitt zum Eingriff in einen ersten Rohradapter (8) und einem zweiten Eingriffsabschnitt zum Eingriff in einen zweiten Rohradapter (2) aufweist, wobei die Befestigung ferner eine Außenwand (30) umfasst, die den Befestigungskörper (25) zumindest teilweise umgibt und von diesem beabstandet ist und ein erstes Ende aufweist, das mit dem Befestigungskörper (25) verbunden ist, wobei die Außenwand (30) einen Befestigungsflansch (31) umfasst, der sich radial in einer Richtung weg von dem Befestigungskörper (25) erstreckt, um das Gehäuse zu überlagern, wobei ein Abschnitt der Außenwand (30) im Gebrauch verformbar ist, um axiale und/oder radiale Bewegung der Rohradapter (8, 2) zu dämpfen.

2. Befestigung nach Anspruch 1, wobei der verformbare Abschnitt der Außenwand (30) ein flexibler Wandabschnitt ist.

3. Befestigung nach Anspruch 1 oder 2, wobei der verformbare Abschnitt ein gewellter Wandabschnitt ist.

4. Befestigung nach einem der Ansprüche 1 bis 3, wobei der Befestigungskörper (25) ein oberes axiales Ende (28) und ein unteres axiales Ende (29) aufweist, wobei der erste Eingriffsabschnitt axial zwischen dem oberen (28) und dem unteren (29) axialen Ende beabstandet ist, und wobei das erste Ende der Außenwand (30) an einer axialen Position zwischen dem ersten Eingriffsabschnitt und dem unteren axialen Ende (29) mit dem Befestigungskörper (25) verbunden ist.

5. Befestigung nach einem der Ansprüche 1 bis 3, wobei der Befestigungskörper (25) ein oberes axiales Ende (28) und ein unteres axiales Ende (29) aufweist, wobei der erste Eingriffsabschnitt axial zwischen dem oberen (28) und dem unteren (29) axialen Ende beabstandet ist, und wobei das erste Ende der Außenwand (30) an einer axialen Position zwischen dem ersten Eingriffsabschnitt und dem oberen axialen Ende (28) mit dem Befestigungskörper (25) verbunden ist.

6. Befestigung nach Anspruch 4 oder 5, wobei der Befestigungskörper (25) eine sekundäre Dichtung (34) an einer Außenfläche an einer axialen Position zwischen dem ersten Eingriffsabschnitt und dem oberen axialen Ende (28) des Befestigungskörpers (25) umfasst.

7. Befestigung nach Anspruch 6, wobei die sekundäre Dichtung (34) an der Außenfläche des Befestigungskörpers (25) zwischen dem Befestigungskörper (25) und der Außenwand (30) bereitgestellt ist.

8. Befestigung nach Anspruch 6, wobei die sekundäre Dichtung (34) an der Außenfläche des Befestigungskörpers (25) entfernt von der Außenwand (30) bereitgestellt ist.

9. Befestigung nach einem der vorstehenden Ansprüche, wobei der erste Eingriffsabschnitt ein radialer Vorsprung ist, der sich in die zentrale Bohrung (26) erstreckt.

10. Befestigung nach einem der vorstehenden Ansprüche, wobei der zweite Eingriffsabschnitt ein Gewindeabschnitt ist.

11. Befestigungsanordnung zum Verbinden von zwei Rohradaptern (8, 2) innerhalb eines Gehäuses, wobei die Befestigungsanordnung Folgendes umfasst:
eine Befestigung (25) nach Anspruch 1;
einen ersten Rohradapter (8), der einen ersten Rohradaptereingriffsabschnitt aufweist; und
einen zweiten Rohradapter (2), der einen zweiten Rohradaptereingriffsabschnitt aufweist.

12. Befestigungsanordnung nach Anspruch 11, ferner umfassend einen Klemmring (40) zum Klemmen des Befestigungsflansches (31) an das Gehäuse.

13. Befestigungsanordnung nach Anspruch 12, wobei der Klemmring (40) ferner ein aufrechtes Element (41) zum Umgeben des Befestigungskörpers (25) umfasst.

14. Befestigungsanordnung nach einem der Ansprüche 11 bis 13, ferner umfassend zumindest eine Hülse, die einen seitlichen ringförmigen Abschnitt (4) und einen axialen Abschnitt (6) aufweist, wobei der seitliche ringförmige Abschnitt zwischen dem Befestigungsflansch (31) und dem Gehäuse eingefügt ist.

15. Gasturbine, die eine Befestigung oder eine Befestigungsanordnung nach einem der vorstehenden Ansprüche aufweist.

## Revendications

1. Attache permettant la connexion de deux raccords de tuyau à l'intérieur d'un boîtier, l'attache comprenant un corps d'attache (25) ayant un alésage central (26) avec une première partie de prise permettant la prise avec un premier raccord de tuyau (8) et une deuxième partie de prise permettant la prise avec un deuxième raccord de tuyau (2), dans lequel l'attache comprend en outre une paroi externe (30) entourant au moins partiellement et espacée dudit corps d'attache (25) et ayant une première extrémité connectée au corps d'attache (25), la paroi externe (30) comprenant une bride d'attache (31) s'étendant radialement dans une direction en éloignement dudit corps d'attache (25) pour venir en chevauchement du boîtier, une partie de la paroi externe (30) étant déformable en utilisation de manière à amortir un déplacement axial et/ou radial des raccords de tuyau (8, 2).

2. Attache selon la revendication 1, dans lequel la partie déformable de la paroi externe (30) est une partie de paroi flexible.

3. Attache selon la revendication 1 ou 2, dans laquelle la partie déformable est une partie de paroi ondulée.

4. Attache selon l'une quelconque des revendications 1 à 3, dans laquelle ledit corps d'attache (25) a une extrémité axiale supérieure (28) et une extrémité axiale inférieure (29) avec la première partie de prise espacée axialement entre les extrémités axiales supérieure (28) et inférieure (29), et dans laquelle la première extrémité de la paroi externe (30) est raccordée au corps d'attache (25) au niveau d'une position axiale entre la première partie de prise et l'extrémité axiale inférieure (29).

5. Attache selon l'une quelconque des revendications 1 à 3, dans laquelle ledit corps d'attache (25) a une extrémité axiale supérieure (28) et une extrémité axiale inférieure (29) avec la première partie de prise espacée axialement entre les extrémités axiales supérieure (28) et inférieure (29), et dans laquelle la première extrémité de la paroi externe (30) est raccordée au corps d'attache (25) au niveau d'une position axiale entre la première partie de prise et l'extrémité axiale supérieure (28).

6. Attache selon l'une quelconque des revendications 4 ou 5, dans laquelle ledit corps d'attache (25) comprend un joint d'étanchéité secondaire (34) sur une surface externe au niveau d'une position axiale entre la première partie de prise et l'extrémité axiale supérieure (28) du corps d'attache (25).

7. Attache selon la revendication 6, dans laquelle ledit joint d'étanchéité secondaire (34) est prévu sur la surface externe du corps d'attache (25) entre le corps d'attache (25) et la paroi externe (30).

8. Attache selon la revendication 6, dans laquelle ledit joint d'étanchéité secondaire (34) est prévu sur la surface externe du corps d'attache (25) à distance de la paroi externe (30).

9. Attache selon l'une quelconque des revendications précédentes, dans laquelle la première partie de prise est une projection radiale s'étendant dans l'alésage central (26).

10. Attache selon l'une quelconque des revendications précédentes, dans laquelle la deuxième partie de prise est une partie filetée.

11. Ensemble d'attache permettant la connexion de deux raccords de tuyau (8, 2) à l'intérieur d'un boîtier, l'ensemble d'attache comprenant :
une attache (25) selon la revendication 1 ;
un premier raccord de tuyau (8) ayant une première partie de prise de raccord de tuyau ; et un deuxième raccord de tuyau (2) ayant une deuxième partie de prise de raccord de tuyau.

12. Ensemble d'attache selon la revendication 11, comprenant en outre un anneau de serrage (40) permettant le serrage de la bride d'attache (31) au boîtier.

13. Ensemble d'attache selon la revendication 12, dans lequel l'anneau de serrage (40) comprend en outre un élément relevé (41) permettant d'entourer le corps d'attache (25).

14. Ensemble d'attache selon l'une quelconque des revendications 11 à 13, comprenant en outre au moins un manchon ayant une partie annulaire latérale (4) et une partie axiale (6) dans lequel la partie annulaire latérale est interposée entre la bride d'attache (31) et le boîtier.

15. Turbine à gaz ayant une attache ou un ensemble d'attache selon l'une quelconque des revendications précédentes.
